# EUROPEAN PATENT APPLICATION

(11) **EP 2 927 841 A1**
(43) Date of publication of application: **07.10.2015**
(21) Application number: 14163201.8
(22) Date of filing: 02.04.2014
(51) Int. Cl.: G06K 9/00

(54) **Spoof prevention for face recognition**

(71) Applicant: Atos IT Solutions and Services GmbH, 1210 Wien (AT)
(72) Inventor: Birchbauer, Josef Alois, 8054 Seiersberg (AT); Hohenegger, Helmut, 1100 Wien (AT)
(74) Representative: Patentanwaltskanzlei WILHELM & BECK

(57) **Abstract**

A method for detecting a spoofing attempt to a face recognition system (100) comprises steps of taking a first picture while the face (105) is illuminated by light coming chiefly from a first light source (115), taking a second picture while the face is illuminated by light coming chiefly from a second light source (120) and determining a protrusion or recess in the face on the basis of brightness information of the first and second pictures. The spoofing attempt can then be detected on the basis of the determined protrusion or recess.

## Description

The present invention concerns a face recognition method and system. Specifically, the present invention concerns the detection of a spoofing attempt where a two-dimensional image is presented to the system or method instead of a real face.

### Background and state of the art

A face recognition system comprises a camera for taking a picture from the face of a person and processing means for determining if the face can be recognized as one of a number of known faces. The recognition process usually relies on identifying specific facial features of the face such as eyes, eyebrows, ears, nose and mouth as well as the head shape, and comparing those features with features of known faces. Alternative methods follow global and holistic approaches like eigenfaces. If the face is recognized, associated permissions can be used to grant access to certain information, physical premises or other protected good.

A face recognition system may be spoofed if a two-dimensional representation of a face that is known to the recognition system is presented to the camera. Under certain conditions, a recognition system may grant access to the protected good, even though no real person or the wrong person is in front of the camera. Some recognition systems therefore require the person to perform some movement such as blinking the eyes or turning the head. However, such movements require the person to be familiar with the process and to cooperate with the system. This may be error-prone and time-consuming.

In US 2010/0140091 A1, it is proposed to take first and second pictures of a face under examination, wherein the first picture is made while light from an illumination unit falls onto the face and the second picture is taken while the illumination unit is off and the face is illuminated by ambient light only. From the different pictures, a protruding degree of the face is determined. Should this degree be smaller than a predetermined threshold, a spoofing attempt is determined.

It is an object of the present invention to provide an improved face recognition method and system as well as a corresponding computer program product. The invention solves this problem by means of a method, a computer program product and a system with the features of the enclosed independent claims. Preferred embodiments are indicated in the dependent claims.

According to the invention, a method for detecting a spoofing attempt to a face recognition system comprises steps of taking the first picture while the face is illuminated by light coming chiefly from a first light source, taking a second picture while the face is illuminated by light coming chiefly from a second light source and determining a protrusion or recess in the face on the basis of brightness information of the first and second picture. The spoofing attempt may then be detected on the basis of the determined protrusion or recess.

By using two independent light sources, it is possible to determine the extent and direction of the protrusion or recess in the face. Also, the relationship of the determined protrusion or recess to a feature of a human face can be determined. Therein, it is possible to make a sharper distinction between a face and a spoofing attempt so that less incorrect determinations take place.

In a preferred embodiment, the protrusion or recess is determined in a predetermined region with respect to the face. The predetermined region can e.g. be an area where a nose, an eye or an ear is expected. Detecting such areas may be part of a face recognition process so that the determined regions may be used both for face recognition and spoofing attempt detection. By determining the protrusion or recess specifically in the predetermined region it is possible to relate the depth information to a human feature. A probability for the acceptance of a spoof for a face may be decreased.

Different approaches may be used in order to determine the protrusion or recess in the face on the basis of said brightness information in the first and second picture.

According to a first variant, first and second regions on either side of a vertical central line of the face are determined and average brightnesses of the first and second region in the first and second picture are compared. In this way, the protrusion or recess can be checked for symmetry. This approach allows for a short and simple implementation and requires the processing of only two regions in each of the first and the second picture.

According to a second variant, first and second regions on either side of a vertical central line of the face are determined, differences in average brightness between the first and second pictures for the first and second region, respectively, are determined and the determined differences are compared to each other.

In this way, a second order derivation is determined which allows for determining a relative drop in brightness. This allows for even further improved determination precision.

According to a third variant, a third picture is taken while the face is illuminated by light coming from diffuse ambient lighting, from both light sources or a light source from above. In the latter case the cast shadows may be used to assess differences differences in brightness, e.g. shadows under the nose. First and second regions on either side of a vertical central line of the face are determined and differences in the average brightnesses of the first and second regions between the first and third and between the second and third pictures, respectively, are determined.

In this way, the determined absolute change of brightness can be made relative so that the variability of average brightness under different lighting conditions across the face can be used for determining the spoofing attempt. This makes it easier to account for additional ambient light sources.

Each of the described variants may be performed twice and the results may be compared. Specifically, the determinations may be performed on a first pair of regions and a second pair of regions, the first pair of regions lying in areas where little protrusions or recesses are expected, the second pair of regions lying in areas where significant protrusions or recesses are expected, and the differences determined for the first and second pairs of regions may be compared. Determination of a spoofing attempt may thus allow for an overall degree of dynamic of the face. Ethnologically different faces may thus be better covered Areas where little protrusions or recesses are expected may include the forehead or the chin, whereas areas where significant protrusions or recesses are expected may comprise the eye sockets and the nose. If the light sources shed light on the face laterally in a horizontal direction, an upper lip region may also count as an area where little protrusions or recesses are expected.

In one of the embodiments, one of the lights has a spectrum which exceeds the human visible spectrum. Specifically, the emitted spectrum may lie exclusively outside of the human visible spectrum. Infrared light, ultra-violet light or a combination of both may be used. In this way, the face may be examined under conditions which are harder to simulate. Spoofing may be detected more easily.

According to another embodiment, the lights have different spectra and share the same position with respect to the face. Depth information can thus be determined on the basis of different wavelengths.

In one embodiment, the light sources are turned on and off periodically over a plurality of cycles and taking the pictures is synchronized with the periods. In a preferred embodiment, a cycling frequency of the light is higher than perceivable by the human eye. This feature also allows for using light sources which are turned on and off periodically anyway, such as fluorescent tubes. Lighting conditions may thus seem more stable to the person under examination.

In order to provide the first and second pictures as well as the third picture, the light sources may be turned on and off with a face shift of 90°. Specifically, the first light source is turned on while the second light source is off, the first picture is taken, the second light source is additionally turned on (or the first light source switched off and a light source from above switched on), the third picture for use in a face recognition process is taken, the first light source is turned off and the second picture is taken. In this way, lighting conditions may appear even more stable to the person under examination and taking the first through third picture may be more easily synchronized by turning the light sources on and off.

According to a second aspect of the invention, a computer program product comprises program code for executing the described method when the computer program product is executed on a processing unit or stored on a computer-readable medium.

According to a third aspect of the invention, a face recognition system for recognizing a face comprises a first light source for illuminating the face, a second light source for illuminating the face, a camera for taking pictures of the face, a control unit for controlling the camera to take a first picture when the face is illuminated chiefly by light coming from the first light source and a second picture when the face is illuminated chiefly by light coming from the second light source. A processing unit is provided as well, the unit being adapted to determine a protrusion or recess in the face on the basis of brightness information of the first and second pictures and detecting a spoofing attempt on the basis of the determined protrusion or recess.

The face recognition system may be used for protecting a premise, information or object from unauthorized access. The system may implement the method described above and thus provide the advantages associated with the method.

In a preferred environment, the first and second light sources are located in opposite hemispheres with respect to the face. In other words, the first and second light sources may be located to the left and the right of the person under examination, preferably in a symmetrical setup.

In the following, the invention will be further discussed with respect to the enclosed figures in which:
- Figure 1: shows a face recognition system;
- Figure 2: shows exemplary pictures of a face of a person in front of the system of Figure 1;
- Figure 3: shows a flow diagram of a method for face recognition or spoofing attempt detection for the system of Figure 1;
- Figures 4: to 6 show flow diagrams of variants of methods for spoofing detection for the system of Figure 1;
- Figure 7: shows a flow diagram of a superordinate method for one of the methods of Figure 4 to 6;
- Figure 8: shows a flow diagram of a method for controlling light sources in the system of Figure 1;
- Figure 9: shows timing diagrams of the light sources of Figure 1.

### Detailed description of embodiments

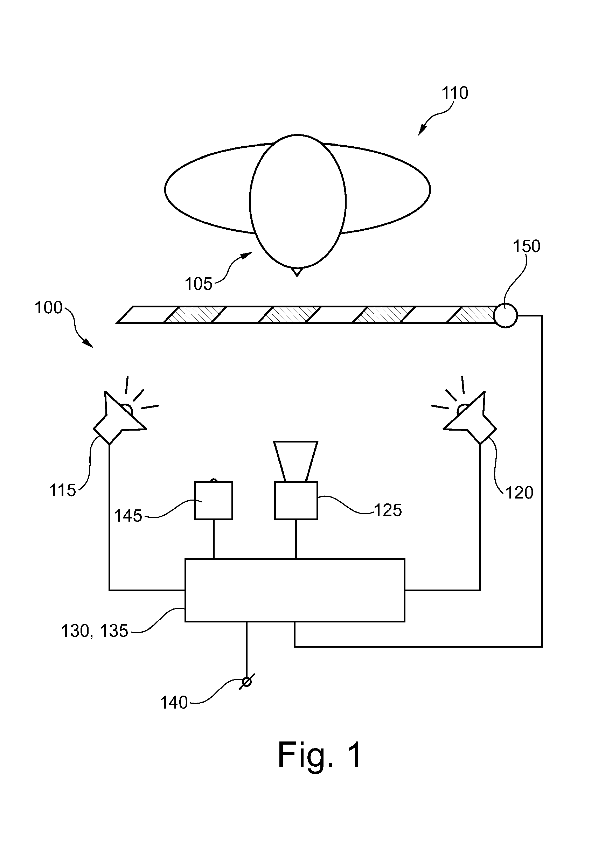

Figure 1 shows a face recognition system 100 for recognizing a face 105 of a person 110. The recognition system 100 comprises a first light source 115, a second light source 120, a camera 125, a control unit 130 and a processing unit 135. The control unit 130 and the processing unit 135 are shown as integrated into one unit, however, they may be implemented as separate units as well. Optionally, an interface 140, a signalling unit 145 and a physical access control 150 may also be provided.

The face recognition system 100 is adapted to detect a spoofing attempt when a two-dimensional representation of the face 105 is presented to the camera 125. In one embodiment, the actual recognition process of face 105 may be carried out by a separate system which is interfaced to the recognition system 100 through the interface 140 while the recognition system 100 only performs the spoofing detection. However, as the spoofing detection process and the face recognition process share some tasks, it makes sense to run both processes on the processing unit 135.

The physical access control 150 may be adapted to restrict access to some object such as a physical premise, an item of value, information or other. The signalling 145 may provide information to the person 110 during the recognition process and particularly during taking one or several pictures of his or her face 105. For example, the signalling unit 145 may show a green light when the recognition system 100 is ready for examining a person 110, a red light while a picture is taken and processing is done, and a green light again after processing has finished. Other variants are possible as well.

The light sources 115 and 120 are preferably distributed horizontally and located on either side of the person 110. As shown, it is preferred that the angle which is enclosed by the light sources 115 and 120 is 90° or larger. In the shown embodiment, the distance between light sources 115 and 120 and the face 105 may lie in the range of 20 to 100 cm. In another embodiment which is not shown in Figure 1, a third light source is installed in the same plane as the first and second light sources 115 and 120 and the third light source 155 preferably shines light from an upper, centred position on the face 105.

The light sources 115, 120 preferably have a large enough opening angle to avoid a spot effect on the face 105. The light sources 115, 120 can furthermore preferably turned on and off quickly. They preferably reach their luminous power quickly after turning on and do not emit an afterglow after turning off. It is preferred that each of the light sources 115, 120 comprises a vertically mounted line or bar, e.g. of light-emitting diodes (LED). The third light source, if used, should comprise a horizontally mounted line or bar.

In one embodiment, light sources 115 and 120 may comprise fluorescent tubes. The fluorescent tubes may be connected to an alternating voltage so that the tubes are turned on and off with the frequency of the alternating current. Each fluorescent tube may be configured to emit light only during the positive or only during the negative half-wave of the alternating current. In this, the light sources 115 und 120 may be configured in such a way that at any given time only one of the light sources 115, 120 is on and the other one is off.

The light sources 115 and 120 are preferably turned on and off through the control unit 130. The control unit 130 is also adapted to control the camera 125 to take two or more picture. Should the light sources 115, 120 turn on and off on their own, control unit 130 may be adapted to synchronize the taking of pictures with a status of the light sources 115, 120.

A first picture will be taken while the face 105 is illuminated by light coming chiefly from the first light source 115 and a second picture while the face 105 is illuminated by light coming chiefly from the second light source 120. During taking the first picture, the first light source 115 is on and the second light source 120 is off, and during taking the second picture the first light source 115 is off and the second light source 120 is on.

In one embodiment, a spectrum of at least one of light sources 115, 120 and 155 exceeds the human visible spectrum which ranges roughly from 380 to 780 nm wavelength. The spectrum of the light sources 115, 120 and 155 may lie partly or completely outside that band. Infrared and/or ultraviolet light may be emitted. The light sources 115, 120 and 155 need not necessarily share the same spectrum.

In yet another embodiment at least two of the light sources 115, 120 and 125 emit light in different spectra but are mounted in the same position with respect to the face 105. In one embodiment it is determined, on the basis of a picture that was made under illumination of a first spectrum, what differences in brightness are to be expected in different areas of the face 105 when the face 105 is illuminated with light of a second spectrum that is different from the first spectrum. A picture of the face 105 that is actually taken under illumination of the second spectrum is then taken and the differences in brightness to the first picture are determined for different regions of the face 105. Should the forecast differences differ more than by a certain factor from the actual differences, a spoof may be detected.

In order to determine what differences are to be exptected, acutal differences for a number of faces 105 may be analysed. Also, the differences in brightness under illumination of different spectra may be analysed for two dimensional reproductions of faces 105.

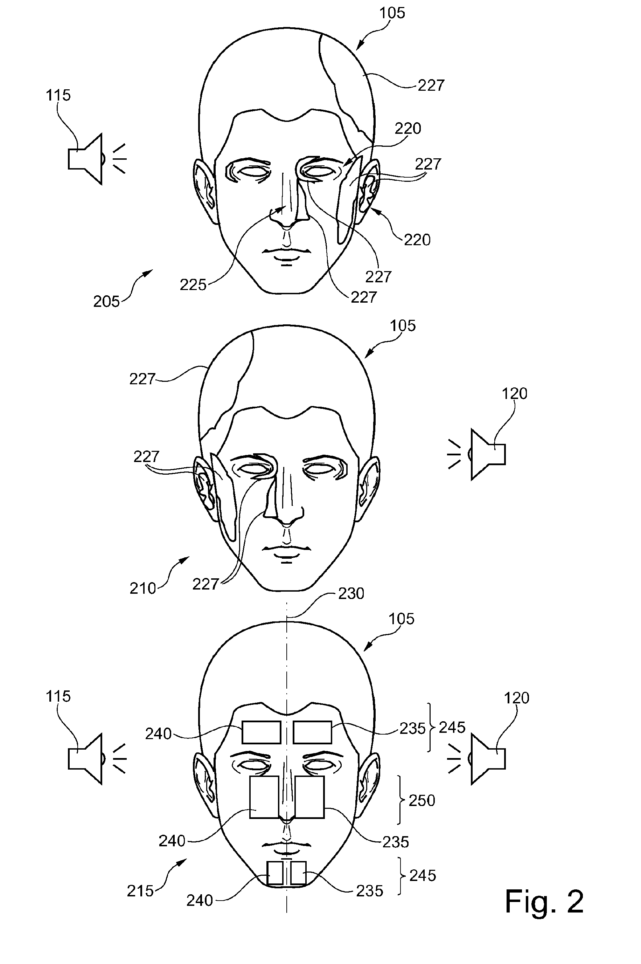

Figure 2 shows three exemplary pictures of a face 105, taken by the system 100 of Figure 1. From top to bottom, a first picture 205, a second picture 210 and a third picture 215 are shown. The first picture 205 shows the face 105 while being illuminated chiefly by the first light source 115. While the first picture 205 was taken, the first light source 115 was on and the second light source 120 was off. Possible ambient light was lower than the light from the first light source 115.

Conversely, the second picture 210 shows the face 105 while illuminated chiefly by the second light source 120. While the second picture 210 was taken, the first light source 115 was off and the second light source 120 was on. Possible ambient light was lower than the light from the second light source 120.

The third picture 215 was taken while the face 105 was either illuminated by both light sources 115, 120 or none of them. In this case, ambient light or light coming from a different source of light is used to provide a consistent illumination on the face 105. In a preferred embodiment, pictures 205-215 are taken in rapid sequence to avoid or at least minimise movement 105 of the face between the pictures 205-215.

From a perspective of the camera 125 in Figure 1, a face 105 comprises one or several recesses 220 such as the eye socket or the ears and one or several protrusions 225 such as the nose. It is proposed to process at least the first picture 205 and the second picture 210 to determine at least one of the recesses 220 or protrusions 225 and determine whether the pictures taken by the camera 125 were made from an actual, three-dimensional face 105 or from a two-dimensional representation of the face 105.

Preferably, the recess 220 of protrusion 225 is determined on the basis of shadows 227 that are cast when the face 105 is illuminated from a lateral position, e.g. by only one of the light sources 115 and 120. Roughly speaking, the recess 220 of protrusion 225 drops the shadow 227 in its neighbourhood and the shadow 227 changes position if the face 105 is illuminated from different sides.

As shown in the third picture 215, a first region 235 and a second region 240 on either side of a vertical central line 230 of face 105 can be defined on the face 105. Preferably, the light sources 115 and 120 are in a symmetrical constellation with respect to the central line 230 and so are the first and second regions 235 and 240. The regions 235 and 240 may lie in a first area 245 where little recesses or protrusions 225 are expected such as on the brow or on the chin. Regions 235 and 240 may also lie in a second area 250 where significant recesses 220 or protrusions 225 are expected, e.g. next to the nose. The areas 245, 250 as well as the regions 235 and 240 may be determined on the basis of feature recognition of face 105 which may be part of the face recognition process. In one embodiment, the position, extent or direction of features such as the eyes, the ears, the nose, the mouth or the hairline may be provided for comparing to the features of known faces in a face recognition process.

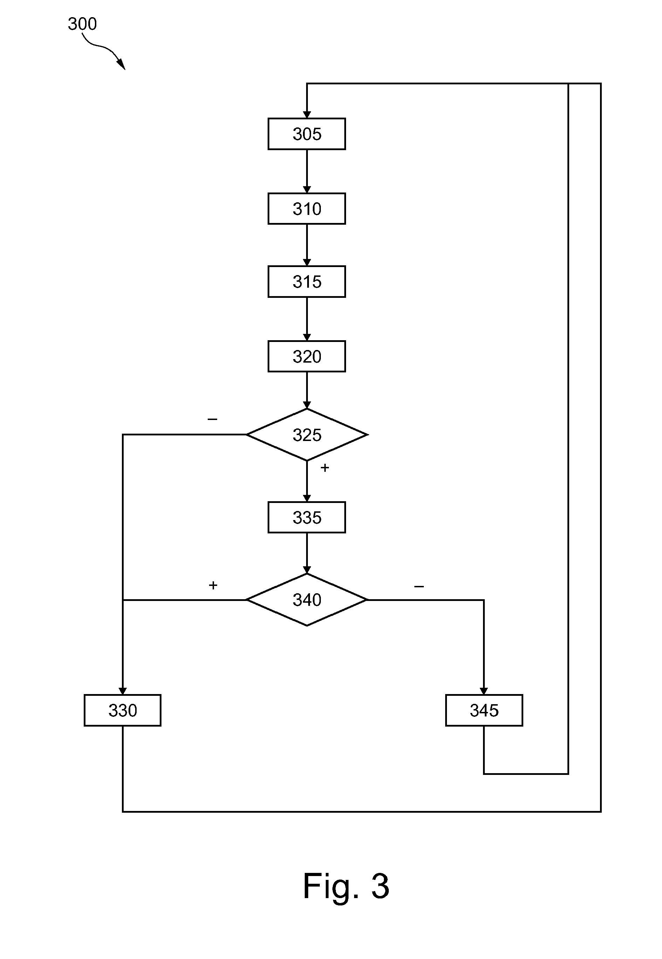

Figure 3 shows a flow diagram of a method 300 for face recognition and a spoofing attempt detection of the system 100 of Figure 1. Method 300 is especially adapted to be carried out on processing unit 135 of control unit 130 in system 100. Method 300 is one exemplary embodiment for an overall process which encompasses both face recognition and spoofing attempt detection.

In a first step 305, the first picture 205 is taken while the face 105 is illuminated chiefly by means of the first light source 115. In a following step 310, the second picture 210 is taken while the face 105 is illuminated chiefly through the second light source 120. In an optional step 315, the first picture 215 is taken while the face 105 is illuminated by diffuse light which may be generated by both light sources 115, 120 at the same time. The order of steps 305 to 315 is arbitrary. In a variant, the third picture 215 may be taken under diffuse light with both light sourcces 115 120 switched on or under light from above.

On the basis of the third picture 215, the face 105 is located and analyzed in a face recognition process in a step 320. If this face recognition process turns out negative, the face 105 is not recognized and physical access control 150 may be controlled to deny access to a person 110 in a step 330. In another preferred embodiment, steps 315 through 325 are performed first and steps 305 and 310 take place only after the face 105 could be located and recognised.

If the face 105 is recognized in step 325, first and second pictures 205, 210 are analyzed in a step 335 and a recess 220 or protrusion 225 is determined in the face 105. On the basis of the determined recess 220 or protrusion 225, a possible spoofing attempt is determined in a step 340. If a spoofing attempt is determined, access is denied in step 330, as discussed above. In the negative, access may be granted in a step 345. After each of steps 330, 335, the method 300 may return to step 305 for reiteration.

Steps 315 to 325 may be known in the art but steps 335 and 350 are of special interest. Results or partial results of the face recognition process, particularly of steps 320 and 325, may however be used again in step 335.

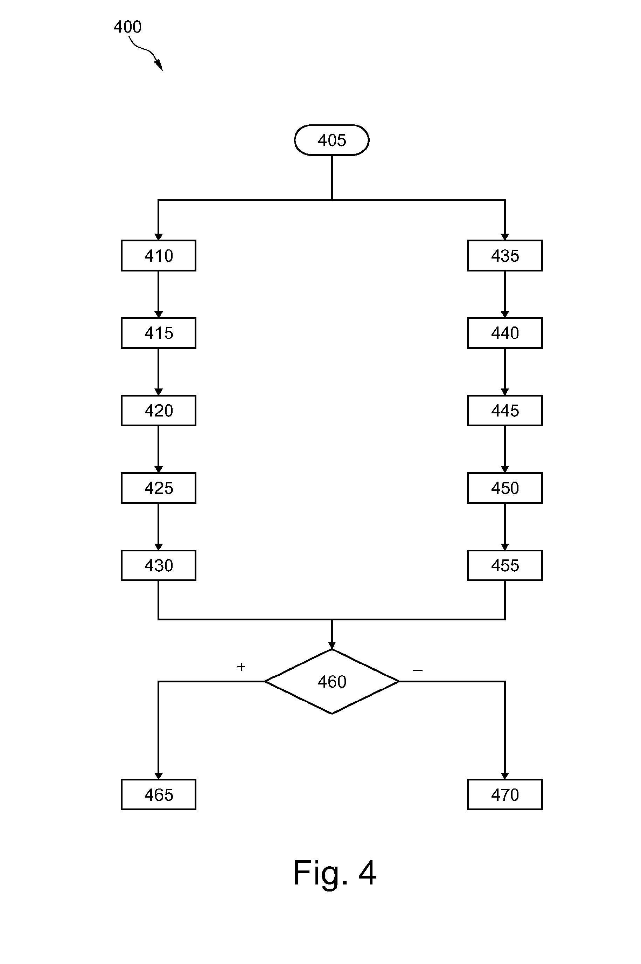

For carrying out steps 335 and 340, different variants may be employed which are explained in more detail with respect to Figures 4, 5 and 6. Those variants generally set in at step 335 of present methods 300.

Figure 4 shows a flow diagram of a method 400 for spoofing detection for the system 100 of Figure 1. After a starting step 405, two corresponding sequences of steps are carried out on the first picture 205 and the second picture 210.

In a step 410, the first picture 205 is selected. In a following step 415, the vertical central line 230 on the face 105 is determined. This step or a part of it may already have been carried out as part of the process recognition, as described above with respect to steps 320 and 325 of the method 300 of Figure 3. In a following step 420, a first region 235 and a second region 240 on opposing sides of the centre line 230, preferably in a symmetrical configuration, are determined. Then, in a step 425, an average brightness of the first region 235 and the second region 240, respectively, is determined. In a step 430, differences in the determined average brightnesses between first and second region are determined.

In steps 435 to 455, corresponding action is carried out in the second picture 210. In this, positions of the first and second regions 235, 240 are preferably identical. The regions 235, 240 are furthermore preferably next to where a recess 220 or protrusion 225 is expected, so that in a different lighting between the first picture 205 and the second picture 210 results in differences in average brightnesses.

In a succeeding step 460, it is determined whether the determined differences match closely enough. A predetermined factor or offset between the determined differences may be allowed. If the differences match, i.e. differences between the differences are smaller than a predetermined amount, no spoofing attempt is determined and method 400 may terminate in a step 465. In the negative, if the determined differences differ more than the predetermined amount, a spoofing attempt may be determined and method 400 terminates in a step 470.

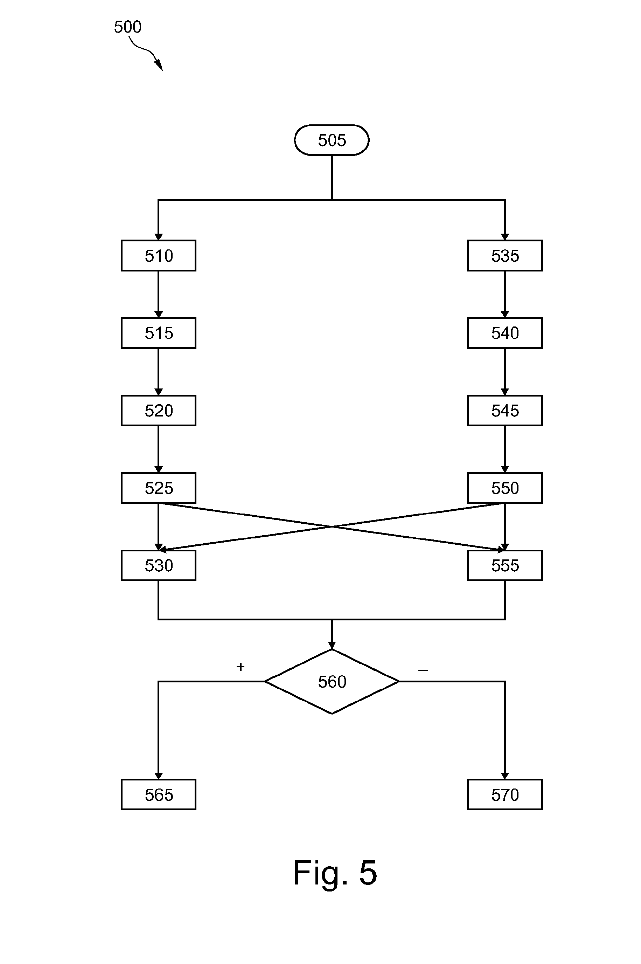

Figure 5 shows a flow diagram of a method 500 which comprises a second variant for steps 335 and 340 of method 300 of Figure 3 and is an alternative to method 400 of Figure 4.

Method 500 starts in a step 505. Subsequently, two sequences of steps are carried out on the first and second pictures 205, 210, respectively, in a similar fashion as described above with respect to Figure 4.

In a step 510, the first picture 205 is selected. Next, in a step 515, the vertical centre line 230 on the face 105 is determined. After than, in a step 520, first and second regions 235, 240 on opposing sides of the centre line 230 and preferably symmetrical to centre line 230 are determined. In a subsequent step 525, the average brightness of first and second regions 235, 240, respectively, are determined. In other words, steps 510 to 525 correspond to steps 410 to 425 of method 400 in Figure 4. Corresponding steps 535 to 550 are carried out on the second picture 210, as described above with respect to steps 435 to 450 in method 400 of Figure 4.

In opposition to the method of Figure 4, a difference of brightnesses in the first region 235 between the first picture 205 and the second picture 210 is determined in a step 530 and a difference between the brightnesses in the second region 240 between the first picture 205 and the second picture 210 is determined in a step 555. In steps 560 to 570, which correspond to steps 460 to 470, a spoofing attempt is determined on the basis of the determined differences as explained above with respect to step 460 of method 400.

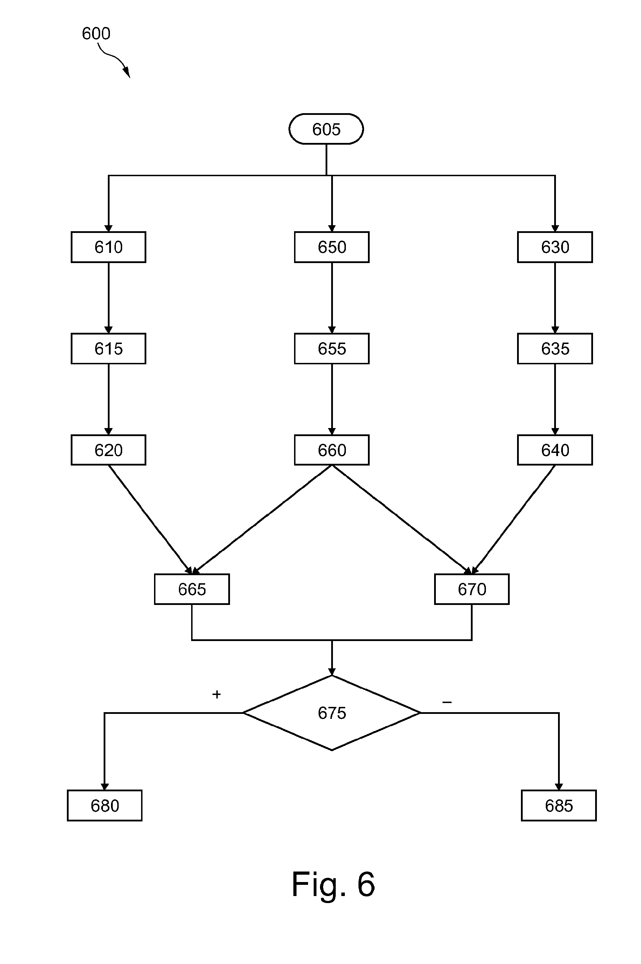

Figure 6 shows the flow diagram of another method 600 for carrying out the steps 335 and 340 in method 300 of Figure 3. Method 600 is a third alternative to methods 400 of Figure 4 and 500 of Figure 5.

Processing starts in a step 605. In a step 610, the first picture 205 is selected and first and second regions 235, 240 on opposing sides of a vertical centre line 230 are determined in a step 615. Again, the regions 235, 240 are preferably symmetrical to a centre line 230. Then, average brightnesses of the first and second regions 235, 240 are determined in a step 620.

Steps 630 to 640, corresponding to steps 610 to 620, are independently carried out on the second picture 210 and steps 650 to 660 are carried out on the third picture 215.

In a step 665, a difference in brightness in the first region 235 and in the second region 240 between first and third pictures 205, 215 is determined. Similarly, in a step 670, differences in average brightnesses in first and second regions 235, 240 between the second picture 210 and the third picture 215 are determined. The remaining steps 675 to 685 correspond to steps 460 to 470, as described above.

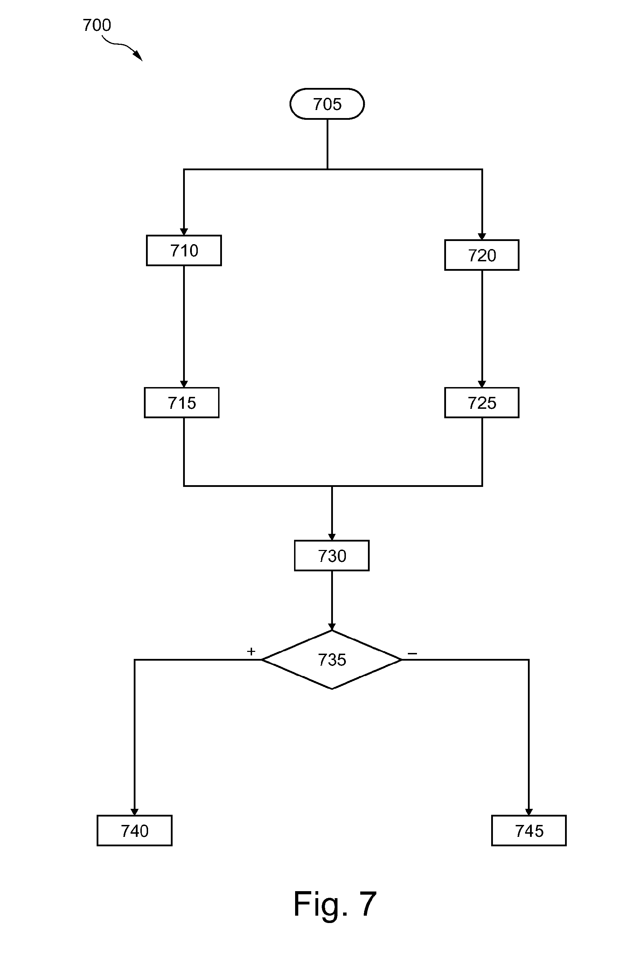

A variant of the methods shown in Figures 4 to 6 may also be carried out on regions 235, 240 which are placed in different areas 245, 250 of the face 105. An example for such iteration is shown in Figure 7 as a flow diagram of a method 700. The method starts in a step 705. In a following step 710, a first pair of regions 235, 240 in the first area 245, where little recesses 220 or protrusions 225 are expected, is determined. After that, in a step 715, the differences in average brightnesses in the regions 235 and 240 are determined using one of methods 400, 500 or 600, as discussed above with respect to Figures 4 to 6.

In a step 720, a second pair of regions 235, 240 in the second area 250, where significant recesses 220 or protrusions 225 are expected, is determined. In a following step 725, a determination of average brightness differences corresponding to step 715 is performed. In this, the methods employed in steps 715 and 725 should be the same.

In a step 730, the determined brightness differences are compared to each other. In the following step 735, it is determined whether the differences differ more from each other than a predetermined threshold. If they do, method 700 may terminate in a step 740 where it is determined that no spoofing attempt could be detected. In the negative, method 700 may terminate in a step 745 in which a spoofing attempt is detected.

It is to be noted that the method 700 of Figure 7 is wrapped around one of methods 400 to 600 and may be used to implement steps 335 and 340 of methods 300 in Figure 3.

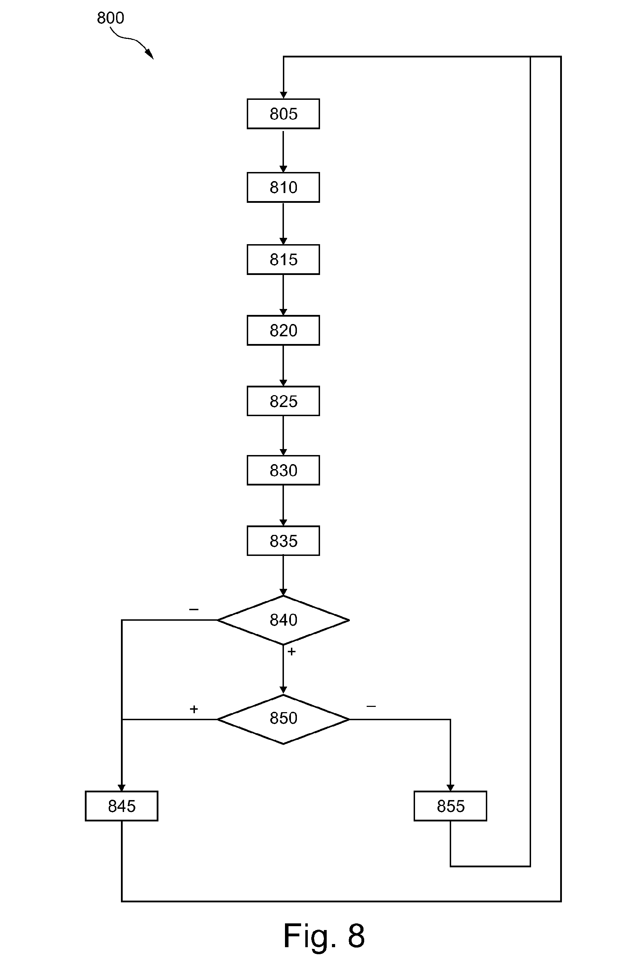

Figure 8 shows another flow diagram of a method 800 for controlling the first and second light sources 115, 120 in the system 100 of Figure 1. In a first step 805, the first light source 115 is turned on. In an optional following step 810, the second light source 120 is turned off if the second light source 120 is not already off. Then, in a step 815, the first picture 205 is taken before the second light source 120 is turned on in a step 820. Now that both light sources 115, 120 are on, the third picture 215 is taken in a step 825. In a following step 830, the first light source 115 is turned off again. After that, the second picture 210 is taken in a step 835.

At this point, the three pictures 205, 210, 215 have been taken under predetermined lighting conditions as mentioned above. In one embodiment, method 800 may branch back to step 805 and reiterate back down to step 835 while processing of first through third pictures 205 - 215 is performed independently. In another embodiment that is shown in Figure 8, processing of the pictures 205 - 215 is carried out in sequence before method 800 branches back to step 805.

In a step 840 which corresponds to step 325 of method 300 in Figure 3, it is determined if the face 105 could be recognized. If the face 105 could not be recognized, method 800 may proceed with step 845 which corresponds to step 330 in method 300 of Figure 3. In the alternative, method 800 proceeds to step 850 in which a spoofing attempt on the basis of the first and second pictures 205, 210 is determined, as described above. If a spoofing attempt is detected, method 800 proceeds to step 845. If no spoofing attempt could be detected, access may be granted to the person 110 in a step 855 which corresponds to step 345 of method 300 in Figure 3. After any one of steps 845 and 850, method 800 may branch back to step 800 in order to run through again.

In another embodiment the face 105 is first recognised on the basis of the third picture of step 825. Only after recognition was positive depth information of face 105 is determined in steps 805 - 820, 830 and 835.

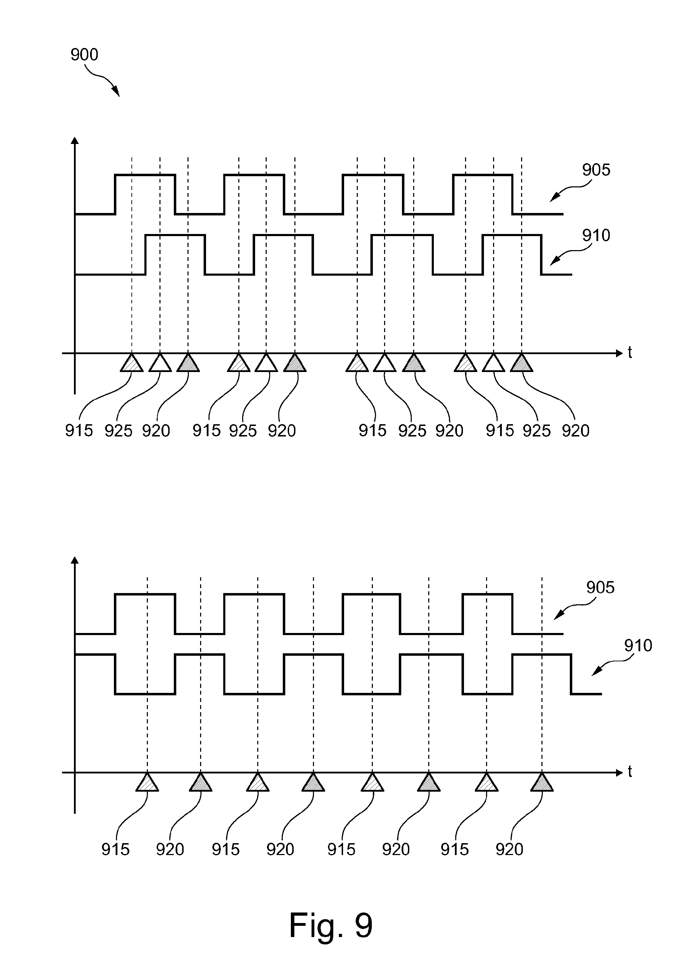

Figure 9 shows two timing diagrams of the light sources 115 and 120 of system 100 of Figure 1. In a horizontal direction, time is shown and in a vertical direction, brightness is depicted. A first graph 905 corresponds to the brightness of the first light source 115 and a second graph 910 corresponds to the brightness of the second light source 120. In each graph 905, 910, a low value means that the corresponding light source 115, 120 is off and a high value means that it is on.

In both the upper and the lower diagram of Figure 9, the intensities of the light of light sources 115 and 120 have the same frequency but a phase offset. In the upper diagram the phase offset is about 90° and in the lower diagram about 180°. In both diagrams, first points in time 915 which are suitable for taking the first picture 205, and second points in time 920 that are suitable for taking the second picture 210 are indicated.

In the upper diagram which corresponds to the switching scheme of method 800 of Figure 8, third points in time 925 which are suitable for taking the third picture 215 are also identified. In a different embodiment, the third points in time 925 may also coincide with when both light sources 115, 120 are turned off.

The second diagram of Figure 9 corresponds to a configuration where the light sources 115, 120 are turned on and off alternately. This can be accomplished by using light sources 115, 120 which are connected to the same alternating current and emit light only if the current flows in one direction. By setting those directions in an anti-parallel manner for the light sources 115, 120, light intensities of the second diagram of Figure 9 can be accomplished. In this case, there is no third point in time 925 for making the third picture. However, the third picture 215 may be taken by using an exposure time that is longer than the time between successive first and second points in time 915 or 920, respectively.

### Reference List

- 100: face recognition system
- 105: face
- 110: person
- 115: first light source
- 120: second light source
- 125: camera
- 130: control unit
- 135: processing unit
- 140: interface
- 145: signalling unit
- 150: physical access control
- 155: third light source
- 205: first picture
- 210: second picture
- 215: third picture
- 220: recess
- 225: protrusion
- 230: centerline
- 235: first region
- 240: second region
- 245: first area
- 250: second area

- 300: method
- 305: take first picture under light from first side
- 310: take second picture under light from second side
- 315: take third picture under diffuse light
- 320: locate face on third picture
- 325: face recognised?
- 330: deny access
- 335: determine protrusion or recess on basis of first and second pictures
- 340: spoofing attempt?
- 345: permit access

- 400: method
- 405: start
- 410: select first picture
- 415: determine vertical center line on face
- 420: determine first and second region on opposing sides of center line
- 425: determine average brightness of first and second region
- 430: determine difference in average brightnesses between first and second region
- 435: select second picture
- 440: determine vertical center line on face
- 445: determine first and second region on opposing sides of center line
- 450: determine average brightness of first and second region
- 455: determine difference in average brightnesses between first and second region
- 460: difference between determined differences > predetermined threshold?
- 465: OK
- 470: determine spoofing attempt

- 500: method
- 505: start
- 510: select first picture
- 515: determine vertical center line on face
- 520: determine first and second region on opposing sides of center line
- 525: determine average brightness of first and second region
- 530: determine difference of brightnesses in first region between both pictures
- 535: select second picture
- 540: determine vertical center line on face
- 545: determine first and second region on opposing sides of center line
- 550: determine average brightness of first and second region
- 555: determine difference of brightnesses in second region between both pictures
- 560: one of determined differences > predetermined threshold?
- 565: OK
- 570: determine spoofing attempt

- 600: method
- 605: start
- 610: select first picture
- 615: determine first and second region on opposing sides of center line
- 620: determine average brightness of first and second region

- 630: select second picture
- 635: determine first and second region on opposing sides of center line
- 640: determine average brightness of first and second region
- 650: select third picture
- 566: determine first and second region on opposing sides of center line
- 660: determine average brightness of first and second region
- 665: determine difference in brightnesses in first and second regions between pictures
- 670: determine difference n brightnesses in first and second regions between pictures
- 675: one of determined differences < predetermined threshold?
- 680: OK
- 685: determine spoofing attempt

- 700: method
- 705: start
- 710: determine first pair of regions in area where little protrusion or recess are expected
- 715: deterimine brightness differences according to one of methods 400, 500 or 600
- 720: determine second pair of regions in area where significant protrusion or recess are expected
- 725: deterimine brightness differences according to one of methods 400, 500 or 600
- 730: compare determined brightness differences
- 735: brightness differences differ more than predetermined threshold?
- 740: OK
- 745: determine spoofing attempt

- 800: method
- 805: turn on first light source
- 810: turn off second light source
- 815: take first picture
- 820: turn on second light source
- 825: take third picture
- 830: turn off first light source
- 835: take second picture
- 840: face recognised on basis of third picture?
- 845: deny access spoofing attempt on basis of first and second pictures determined? deny access permit access
- 905: first graph
- 910: second graph
- 915: first point in time
- 920: second point in time
- 925: third point in time

## Claims

1. Method (300) for detecting a spoofing attempt to a face recognition system (100), comprising the following steps:
- taking (305) a first picture (205) while the face (105) is illuminated by light coming chiefly from a first light source (115);
- taking (310) a second picture (210) while the face (105) is illuminated by light coming chiefly from a second light source (120);
- determining (335) a protrusion (225) or recess (220) in the face (105) on the basis of brightness information of the first (205) and second (210) pictures, and
- detecting (340) the spoofing attempt on the basis of the determined protrusion (225) or recess (220).

2. Method (300) according to one of the preceding claims, wherein the protrusion (225) or recess (220) is determined in a predetermined region (235, 240) with respect to the face (105).

3. Method (300, 400) according to one of claims 1 or 2, further comprising steps of:
- determining (420, 445) first and second regions (235, 240) on either side of a vertical centreline (230) of the face (105);
- comparing (460) average brightnesses of the first (335) and second region (340) in the first (205) and second (210) picture.

4. Method (300, 500) according to one of claims 1 or 2, further comprising steps of
- determining (520, 545) first and second regions (235, 240) on either side of a vertical centreline (230) of the face (105);
- determining (530, 555) differences in average brightness between the first (205) and second (210) pictures for the first (235) and second (240) region respectively;
- comparing (560) the determined differences to each other.

5. Method (300, 600) according to one of claims 1 or 2, further comprising steps of:
- taking (315) a third picture while the face (105) is illuminated by light coming from both light sources (115, 120);
- determining (615, 635, 655) first (235) and second (240) regions on either side of a vertical centreline (230) of the face (105);
- determining (665, 670) a difference in the average brightnesses of the first (235) and second (240) regions between the first (205) and third (215) and between the second (210) and third (215) pictures respectively.

6. Method (300, 700) according to claim 1 or 2, wherein the steps of one of claims 3 to 5 are performed on a first pair of regions (235, 240) and second pair of regions (235, 240),
- the first pair of regions (235, 240) lying in areas (245) where little protrusion (225) or recess (220) are expected,
- the second pair of regions (235, 240) lying in areas (250) where significant protrusion (225) or recess (220) are expected,
- and the differences determined for the first and second pairs of regions are compared (730).

7. Method (300) according to one of the preceding claims, wherein one of the lights (115, 120) has a spectrum that exceeds the human visible spectrum.

8. Method (300) according to one of the preceding claims, wherein the lights (115, 120) have different spectra and share the same position with respect to the face (105).

9. Method (300) according to one of the preceding claims, wherein the light sources (115, 120) are turned on and off periodically (900) over a plurality of cycles and taking the pictures (205-215) is synchronized with the periods.

10. Method (300) according to claim 9, wherein a cycling frequency of the lights is higher than perceivable by the human eye when unmoved with respect to the light sources.

11. Method (300, 800) according to one of the preceding claims, further comprising steps of:
- turning on (805) the first light source (115);
- turning off (810) the second light source (120);
- taking (815) the first picture (205);
- additionally turning on (820) the second light source (120);
- taking (825) a third picture (215) for use in a face recognition process;
- turning off (830) the first light source (115),
and
- taking (935) the second picture (210).

12. Computer program product comprising program code for executing a method (300) according to one of the preceding claims, when the computer program product is executed on a processing unit (135) or stored on a computer readable medium.

13. Face recognition system (100) for recognising a face (105), comprising:
- a first light source (115) for illuminating the face (105);
- a second light source (120) for illuminating the face (105);
- a camera (125) for taking pictures of the face (105);
- a control unit (130) for controlling the camera (125) to take a first picture (205) when the face (105) is illuminated chiefly by light coming from the first light source (115) and a second picture (210) when the face (105) is illuminated chiefly by light coming from the second light source (120);
- a processing unit (135) adapted to determining a protrusion (225) or recess (220) in the face (105) on the basis of brightness information of the first (205) and second (210) pictures, and detecting a spoofing attempt on the basis of the determined protrusion (225) or recess (220).

14. System (100) according to claim 13, wherein the first (115) and second (120) light sources are located in opposite hemispheres with respect to the face (105).
